Europäisches Patentamt

European Patent Office

Office européen des brevets

(11) Numéro de publication: **0 135 619**
**A1**

## DEMANDE DE BREVET EUROPEEN

(21) Numéro de dépôt: 83201368.4

(51) Int. Cl.⁴: **H 01 M 4/16,** H 01 M 4/04

(22) Date de dépôt: **26.09.83**

(43) Date de publication de la demande: 03.04.85
**Bulletin 85/14**

(71) Demandeur: **Potuznik, Stanislav, rue des Prés 33,
CH-2017 Boudry (CH)**
Demandeur: **Fluck, Eric, rue des Prés 33,
CH-2017 Boudry (CH)**

(72) Inventeur: **Potuznik, Stanislav, rue des Prés 33,
CH-2017 Boudry (CH)**
Inventeur: **Fluck, Eric, rue des Prés 33, CH-2017 Boudry
(CH)**

(74) Mandataire: **Mabut, Marie-France et al, c/o Bugnion
S.A. 10, route de Florissant Case Postale 375,
CH-1211 Genève 12 - Champel (CH)**

(84) Etats contractants désignés: **BE DE FR GB IT SE**

(54) Installation de production des plaques positives d'accumulateur électrique.

(57) L'installation comprend une cabine (1) à l'intérieur de laquelle une table (7) montée rotativement autour d'un axe vertical (8) est entraînée pas à pas, par pas de 90° pour amener successivement les jeux des plaques au-dessous des moyens automatiques de remplissage (5), de nettoyage (6) de fermeture (21) et au poste de chargement/déchargement des plaques. La cabine est munie de moyens d'aspiration (23), de récupération (12; 22) de la poudre de matière active, et de vibration (9). La fermeture automatique des plaques est rendue possible après avoir centré automatiquement les fils à l'intérieur des tubes à l'aide de deux peignes.

- 1 -

<u>Installation de production des plaques positives d'accumulateur électrique</u>.

La présente invention concerne une installation de production des plaques positives d'accumulateur électrique remplies d'une poudre de matière active, telle que l'oxyde de plomb ou un mélange de minium avec du PbO2 ou poudre Barton, comprenant une cabine hermétiquement fermée par au moins une porte, abritant des moyens de remplissage et de nettoyage automatiques des plaques, une table montée rotativement autour d'un axe vertical et pouvant se déplacer verticalement, des moyens d'apiration et de récupération de la poudre de matière active et des moyens de vibration.

Dans les installations existantes le remplissage des plaques et plus particulièrement des tubes de plaques positives par une poudre de matière active, se fait par des moyens automatiques ainsi que le nettoyage pour enlever la poudre de matière active débordant de tubes ou se trouvant sur la surface extérieure de chaque plaque. Si ces deux opérations s'effectuent automatiquement sans que la présence humaine soit nécessaire, sauf pour la commande à distance, la fermeture des plaques se fait manuellement. Ce travail est long, fastidieux et surtout nocif à cause de la poudre de matière active.

Pour la fermeture de plaques remplies habituellement par de l'oxyde de plomb il faut dans un premier temps centrer les fils se trouvant à l'intérieur de chaque tube, positionner la barrette de fermeture et la pousser pour assurer la fermeture. La perte de temps étant évidente, il faut préciser d'une part que lors de la fermeture de chaque plaque de la poudre peut s'échapper en polluant l'atmosphère environnante nuisant à la santé du travailleur et, d'autre part les parois des tubes étant extrêmement minces un faux positionnement de la barrette ou un effort, pour assurer la fermeture, plus grand que nécessaire déchire la partie supérieure de tubes réduisant ainsi la qualité de plaques ou simplement les détruisant et en diminuant en conséquence la production.

La présente invention a pour but d'obvier à ces inconvénients.

L'installation selon l'invention est caractérisée par le fait que la table comporte un poste de chargement

0135619

respectivement déchargement des plaques vides, respectivement remplies, nettoyées et fermées, un poste de remplissage, un poste de nettoyage et un poste de fermeture automatique des plaques, ces postes étant répartis autour de l'axe vertical de la table et espacés angulairement l'un de l'autre de 90°, des moyens pour entraîner la table pas à pas par pas de 90°, des moyens de commande simultanée des postes de remplissage, de nettoyage et de fermeture des plaques opérant sur trois jeux de plaques.

Les avantages obtenus grâce à l'invention consistent surtout à l'élimination des places de travail malpropres car la fermeture des plaques est aussi automatique et à la rapidité de production car le remplissage, nettoyage et fermeture des plaques s'opèrent simultanément sur trois jeux de plaques. Un jeu de plaques vides introduit manuellement ou automatiquement dans l'installation est, quelques minutes plus tard, rempli, nettoyé et fermé. L'opération de fermeture des plaques étant automatique, la qualité des plaques est assurée et les pertes minimisées car seulement un mauvais réglage du dispositif peut endommager les tubes ; d'une autre part le rendement est plus élevé car l'automatisation de la fermeture des plaques permet une cadence plus élevée tout en éliminant une place de travail nocif.

Selon une variante, il est possible d'accéder aux différents dispositifs contenus dans la cabine pour effectuer une réparation ou un réglage sans avoir à entrer à l'intérieur de la cabine, soit par des portes se trouvant face aux différents postes de travail, soit, selon une variante, en faisant tourner la partie latérale de la cabine de sorte que l'unique porte vient en face du dispositif à régler ou à réparer en évitant ainsi à l'ouvrier d'entrer et séjourner à l'intérieur de la cabine dont l'atmosphère est polluée par la poudre de matière active.

La bonne répartition de la poudre et l'homogénéité sont assurées par des vibrations auxquelles sont soumises les plaques lors de remplissage. La fréquence et/ou amplitude de ces vibrations qui sont dirigées en principe selon deux directions différentes peuvent être variées.

Le dessin annexé représente à titre d'exemple, une forme d'exécution de l'invention.

La figure 1 représente une vue schématique frontale de l'installation après avoir retiré la paroi frontale de la cabine.

La figure 2 représente une vue schématique en plan de la table et des quatre postes de travail.

La figure 3 est une vue en coupe d'un détail du dispositif de fermeture des plaques.

La figure 4 est une vue en plan de deux peignes en position fermée.

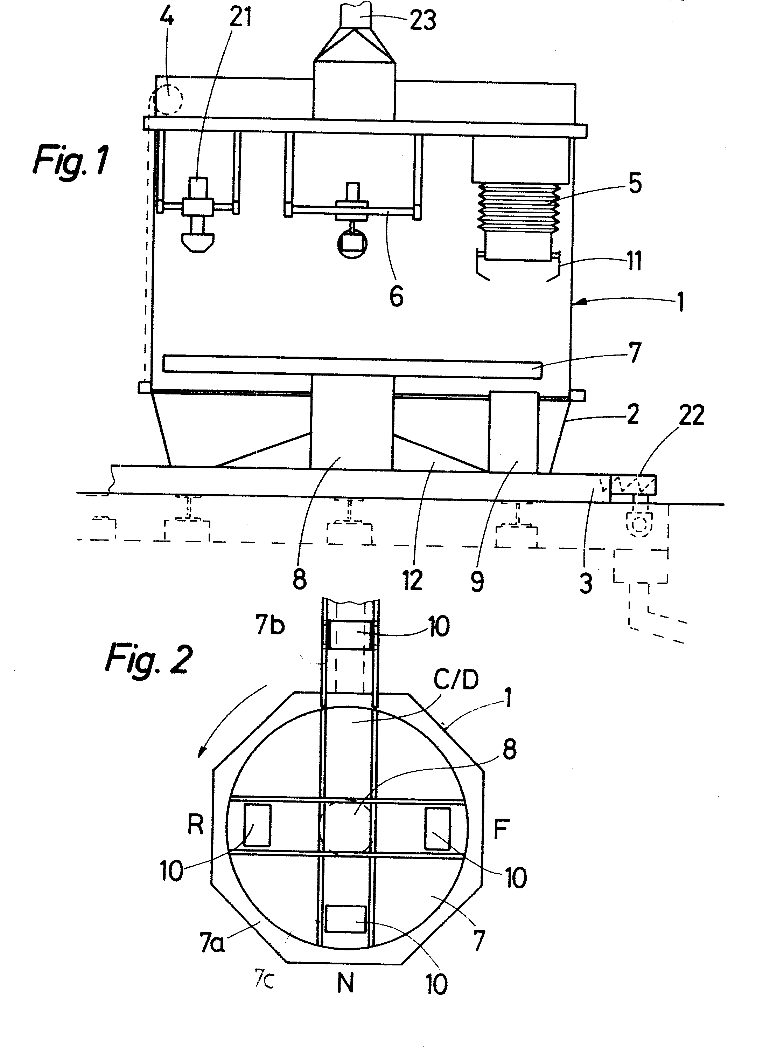

L'installation comprend (figure 1) une cabine 1 prismatique ou cylindrique se terminant en une partie inférieure tronconique 2, par laquelle repose sur un bâti 3. L'accès à l'intérieur de la cabine est assuré par une porte 4 ou rideau coulissant monté sur la paroi latérale de la cabine 1. La partie tronconique 2 de la cabine est montée sur le bâti 3 de sorte que la partie latérale de la cabine puisse tourner autour d'un axe vertical. Le toit de la cabine est fixe et il est supporté par un ou plusieurs piliers se trouvant à l'intérieur ou à l'extérieur de la cabine.

A l'intérieur de la cabine on trouve essentiellement un dispositif de remplissage 5, un dispositif de nettoyage 6, un dispositif de fermeture automatique 21, des plaques, une table 7 montée sur un axe 8 pouvant tourner par pas de 90° et se déplacer verticalement et un vibrateur 9. La table 7 a une forme cylindrique (figure 2), mais une table rectangulaire ou autre peut aussi être utilisée. La partie supérieure de la table 7 se trouve à l'intérieur d'un anneau 7a fixe dont la paroi latérale est prismatique ou cylindrique. Sur une portion de la surface supérieure de l'anneau 7a aboutit un dispositif de transfert 7b, par exemple à rails pour être raccordé avec des rails 7c se trouvant sur la table 7 comme ceci sera expliqué ultérieurement.

Les dispositifs de remplissage 5, de nettoyage 6 et de fermeture automatique 21 sont fixés sur des supports eux-mêmes fixés au plafond de la cabine 1.

L'installation comprend quatre postes de travail distincts correspondant aux quatre extrémités de la croix formée par les rails 7c de la table 7, un poste de chargement/déchargement C/D, un poste de remplissage R, un poste de nettoyage N et un poste de fermeture F des plaques. Le poste de chargement/déchargement C/D se trouve en face de la porte coulissante 4, à travers lequel passe le dispositif de transfert 7b. A l'extrémité du dispositif de transfert 7b, extérieure à la cabine 1 se trouve la place de l'ouvrier s'occupant du chargement/déchargement de supports 10 contenant les plaques vides, respectivement remplies.

Les plaques sont disposées verticalement sur des supports munis de tasseaux pour recevoir la partie inférieure de plaques et des pièces intercalaires pour soutenir et assurer la disposition de la partie supérieure des plaques. Les pièces intercalaires épousent parfaitement les parois extérieures des tubes des plaques qu'ils séparent.

Pour permettre l'adaptation de supports aux différentes hauteurs de plaque, qui varient habituellement de 100 à 650 mm, les supports sont munis de moyens permettant de disposer des tasseaux rapidement à la hauteur voulue, notamment à l'aide des goupilles s'engageant transversalement dans les tubes fermant l'ossature du support 10.

Le fonctionnement de l'installation est le suivant : un support 10 supportant un certain nombre des plaques disposées verticalement est transféré par le dispositif 7b à l'intérieur de la cabine 1 à travers la porte 4 et il est déposé sur la table 7. La table 7 tourne de 90° et elle amène les plaques vides au poste de remplissage R. De même, les plaques remplies précédemment sont amenées par cette rotation au poste de nettoyage N, les plaques nettoyées au poste de fermeture F et les plaques fermées au poste de chargement/déchargement C/D. On décharge les plaques terminées par le dispositif de transfert 7b et on ferme la porte 4. Par la suite, la table se déplace verticalement jusqu'à ce que le support 10 avec les plaques vides accroche la partie inférieure 11 du dispositif de remplissage 5. La table redescend jusqu'à ce que la partie de la table supportant les plaques à remplir touche le vibrateur 9. A ce moment la poudre de matière active est versée dans les tubes tandis que le vibrateur 9 assure son tassement dans les tubes. Simultanément au poste de nettoyage N de brosses nettoient les plaques remplies précédemment et le système de fermeture automatique 21 ferme les plaques remplies et nettoyées auparavant au poste F. Après la fin de ces opérations, la table 7 se déplace verticalement vers le haut pour amener le dispositif de remplissage 5 à sa position initiale. Après décrochement du dispositif de remplissage 5 la table 7 redescend à une position intermédiaire. On ouvre la porte 4, on charge un support des plaques vides que pendant ce temps a été chargé sur le dispositif de transfert 7b pour l'ouvrier et on recommence comme précédemment.

Un dispositif d'apiration 23 aspire l'air pollué se trouvant à l'intérieur de la cabine 1. Afin d'assurer un bon tassement de la poudre à l'intérieur des tubes on applique par l'intermédiaire du vibrateur 9 des vibrations dont l'amplitude et/ou la fréquence peut être changée en fonction des dimensions des tubes.

Selon une variante préférée les vibrations appliquées à la table sont dirigées horizontalement, tandis qu'un second vibrateur solidaire du dispositif de remplissage 5 applique sur la partie supérieure du support 10 des vibrations verticales. Il est également possible de soumettre le support 10 à des chocs répétés afin d'améliorer le tassement de la poudre. Enfin, le dispositif de remplissage est relié à un dispositif distributeur de poudre, lequel est également muni d'un dispositif générant des vibrations afin d'assurer la distribution uniforme de la poudre et surtout désagréger les éventuelles particules compactes.

La poudre de matière active se trouvant sur le plancher de la cabine après le remplissage et le nettoyage de plaques peut être récupérée par l'intermédiaire de deux ou plusieurs pelles 12 solidaires de l'axe 8 de la table. Lors de la rotation de la table 7 la poudre est ramassée par les pelles 12 et conduite vers un canal se trouvant au plancher de la cabine 1 à l'intérieur duquel une vis sans fin 22 horizontale la conduit vers un récipient de récupération.

Le seul travail manuel consiste au chargement des plaques vides et le déchargement des plaques terminées. L'ouvrier n'entre jamais en contact avec l'oxyde de plomb. Cette installation assure la production horaire de 300 plaques de même grandeur. Les réglages nécessaires en cas de changement de grandeur des plaques demandent un arrêt de l'ordre de 30 minutes.

La présente invention concerne aussi les moyens de fermeture automatique 21 des plaques.

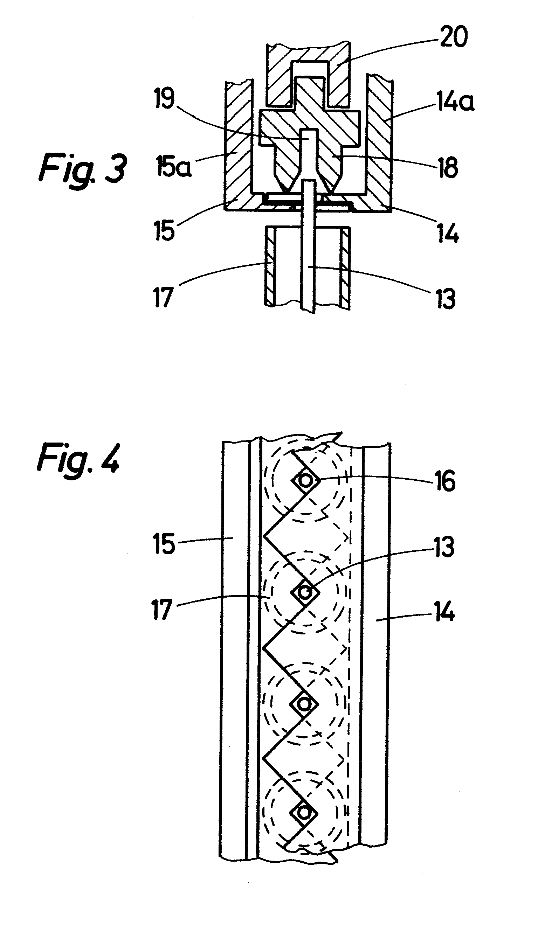

Les fils 13 (figures 3 et 4) se trouvant à l'intérieur des tubes doivent être centrés et soutenus à cette position avant la fermeture. Deux peignes 14, 15 laissant en position fermée, subsister entre leurs dents des ouvertures 16 centrées sur les axes de tubes 17, et laissant en position ouverte des ouvertures permettant le passage vertical des tubes dont le diamètre est au moins égal à celui des tubes à fermer, sont placés en position ouverte au-dessus de la plaque à fermer. En fermant les peignes 14 et 15 les extrémités des fils 13 dépassant de quelques millimètres les bords supérieurs de tubes sont récupérées et poussées par les peignes et emprisonnées à l'intérieur des logements 16, ainsi les fils sont parfaitement centrés à l'intérieur des tubes. Par la suite une barrette de fermeture 18 est amenée et elle est positionnée par les deux ailes 14a et 15a de deux peignes 14 et 15, tandis que les extrémités supérieures des fils 13 sont partiellement engagées dans les logements 19 prévus sur la barrette 18. Par la suite les peignes s'ouvrent et la barrette de fermeture ferme les tubes de la plaque poussée par l'extrémité 20 d'un piston animé d'un mouvement vibratoire. Après avoir fermé une plaque le dispositif se déplace pour effectuer la fermeture d'une plaque parallèle. Le dispositif peut fermer simultanément plusieurs plaques se trouvant l'une à côté de l'autre dans le sens de la longueur de la barrette de fermeture.

<u>Revendications</u>

1. Installation de production des plaques positives d'accumulateur électrique rermplies d'une poudre de matière active comprenant une cabine hermétiquement fermée par au moins une porte, abritant des moyens de remplisssage et de nettoyage automatiques des plaques, une table montée rotativement autour d'un axe vertical et pouvant se déplacer verticalement, des moyens d'apiration et de récupération de la poudre de matière active et des moyens de vibration, caractérisée par le fait que la table comporte un poste de chargement respectivement déchargement (C/D) des plaques vides respectivement remplies nettoyées et fermées, un poste de remplissage (R), un poste de nettoyage (N) et un poste de fermeture automatique (F) des plaques et espacés angulairement l'un de l'autre de 90°, des moyens pour entraîner la table pas à pas par pas de 90°, des moyens de commande simultanée des postes de remplissage, de nettoyage et de fermeture des plaques opérant sur trois jeux de plaques.

2. Installation selon la revendication 1, caractérisée par le fait que la partie latérale de la cabine peut tourner de sorte que les moyens de remplissage, de nettoyage et de fermeture des plaques soient directement accessibles par la porte de la cabine.

3. Installation selon l'une des revendictions 1 ou 2, caractérisée par le fait que les moyens de vibrations transmettent des vibrations aux plaques situées au poste de remplissage selon deux directions différentes pour assurer l'homogénéité du remplissage.

0135619

4. Installation selon la revendication 3, caractérisée par le fait que les moyens de vibrations sont munis de dispositifs permettant de faire varier l'amplitude et/ou la fréquence de vibrations.

5. Installation selon l'une des revendications 1 à 4, caractérisée par le fait que les plaques sont disposées verticalement dans des supports munis de moyens assurant d'une part l'espacement entre les plaques et d'autre part l'adaptation aux différentes grandeurs des plaques.

6. Installation selon l'une des revendications 1 à 5, caractérisée par le fait que les moyens de fermeture automatique des plaques sont constitués par deux peignes assurant le centrage et soutenant les fils se trouvant à l'intérieur des tubes de chaque plaque, un dispositif amenant une barrette de fermeture, des moyens assurant le positionnement de ladite barrette jusqu'à ce que les extrémités supérieures de fils soient partiellement engagées dans des logements prévus sur la barrette et des moyens écartant les peignes et assurant la fermeture de la plaque en poussant ladite barrette.

- 1/II -

0135619

Fig. 1

Fig. 2

0135619

Fig. 3

Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-2 732 767 (VARTA) <br> * Figure; revendication 1; page 2, alin as 2,3; page 4, alin as 2,3 * | 1 | H 01 M 4/16 <br> H 01 M 4/04 |
| A | US-A-1 942 641 (C.D. GALLOWAY) <br> * Figures 1,3,11; revendications 2,8,9; page 2, lignes 91-94, 108-112 * | 1 | |
| A | DE-A-2 713 167 (VARTA) <br> * Figures 1,2; revendications 1,2 * | 6 | |
| A | FR-A-2 348 584 (CHLORIDE GROUP LTD.) | | |
| A | FR-A-1 395 912 (HOLSTEIN & KAPPERT) <br> * Figure 5; page 2, colonne de gauche * | 1 | |
| A | US-A-3 967 659 (G.W. WARNER et al.) <br> * Figures 2,7,5; revendication 1; colonne 7, lignes 25-29; colonne 6, lignes 25-60 * | 1,3 | |
| E | CH-A- 641 594 (S. POTUZNIK) <br><br> * En entier * | 1,2,5,6 | |

**DOMAINES TECHNIQUES RECHERCHES (Int. Cl. ³)**

H 01 M 4/16
H 01 M 4/04
H 01 M 4/76
B 65 B 43/50
B 65 B 1/22

Le présent rapport de recherche a été établi pour toutes les revendications

| Lieu de la recherche <br> LA HAYE | Date d'achèvement de la recherche <br> 30-05-1984 | Examinateur <br> D'HONDT J.W. |
|---|---|---|